# EUROPEAN PATENT APPLICATION

(11) **EP 2 696 218 A2**
(43) Date of publication of application: **12.02.2014**
(21) Application number: 13178644.4
(22) Date of filing: 30.07.2013
(51) Int. Cl.: G01V 1/38

(54) **Device and method for synchronized marine acquisition with reduced interference noise**

(30) Priority: 31.07.2012 US 201261677523 P
(71) Applicant: CGG Services SA, 91300 Massy (FR)
(72) Inventor: Poole, Gordon, 91300 MASSY (FR)
(74) Representative: Regimbeau

(57) **Abstract**

Method that acquires seismic data in a region having time restrictions. The method includes deploying first and second seismic vessels (410, 420) having first and second seismic sources (412, 422), respectively; separating the first and second seismic sources (412, 422) from each other by a predetermined distance d; towing the first and second seismic sources (412, 422) across the region while maintaining the predetermined distance d; shooting simultaneously the first and second seismic sources (412, 422); and recording seismic signals corresponding to the first and second seismic sources (412, 422). The predetermined distance d is calculated so that first seismic signals corresponding to the first source (412) are recorded during an actual recording portion (510) while second seismic signals corresponding to the second source (422) are recorded during a recording lag portion (512), which is later in time than the actual recording portion (510).

## Description

### BACKGROUND

### TECHNICAL FIELD

Embodiments of the subject matter disclosed herein generally relate to methods and systems and, more particularly, to mechanisms and techniques for geophysical exploration using two or more vessels generating seismic waves in proximity to each other.

### DISCUSSION OF THE BACKGROUND

Reflection seismology is a method of geophysical exploration to determine the properties of a portion of a subsurface layer in the earth, which is information especially helpful in the oil and gas industry. Marine reflection seismology is based on the use of a controlled source that sends energy waves into the earth. By measuring the time it takes for the reflections to come back to plural receivers, it is possible to estimate the depth and/or composition of the features causing such reflections. These features may be associated with subterranean hydrocarbon deposits.

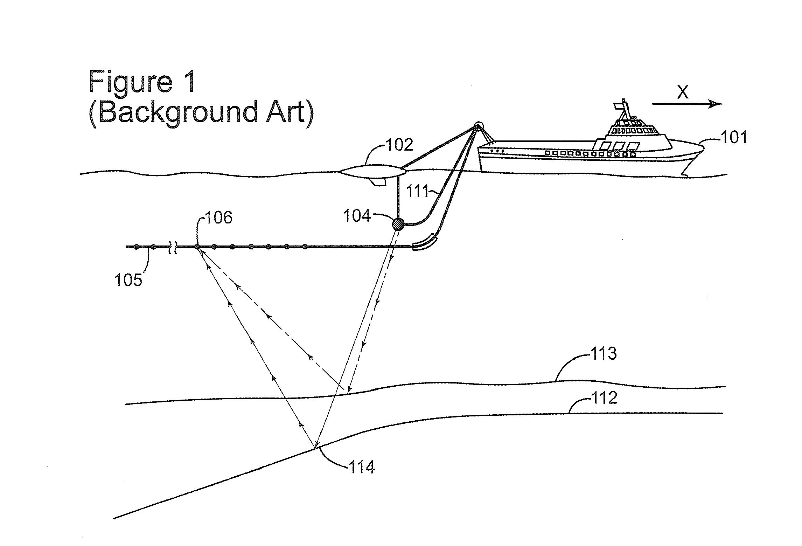

For marine applications, commonly used seismic sources are essentially impulsive (e.g., compressed air is suddenly allowed to expand). One of the most used sources is airguns. An airgun produces a high amount of acoustic energy over a short time. Such a source is towed by a vessel at a certain depth along direction X. The acoustic waves from the airgun propagate in all directions. The airgun instantaneously releases large peak acoustic pressure and energy. Such a source is illustrated in Figure 1. This figure shows a source array 104 being towed behind a vessel 101. When the source array is activated, acoustic energy is coupled into the water and transmitted into the earth, where part of the energy is partially reflected back from the ocean bottom 113 and from rock formation interfaces 112 (rock layer that has a change in acoustic impedance). Sensors or receivers 106 used to record the reflected energy include hydrophones, geophones and/or accelerometers. The receivers can be encapsulated in either fluid filled or solid streamers 105 that are also towed by vessels at shallow depth.

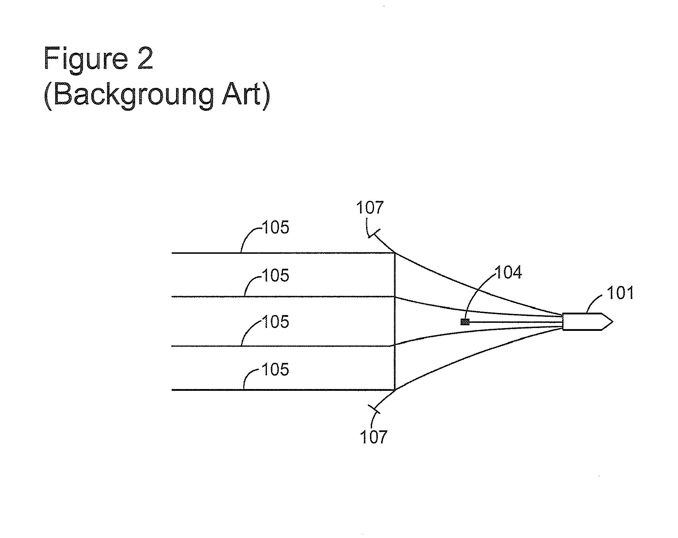

Currently, it is typical for one vessel to tow multiple streamers with diverters 107 employed to ensure streamer separation by a fixed distance, as illustrated in Figure 2. In order to maintain the proper spacing between the streamers and sources, the vessel moves forward continuously, typically at a rate of about 4 knots (2 m/s). In some cases, the streamer can be controlled so that all receivers are at a common depth, or in other cases the receivers in each streamer are controlled to follow a particular depth profile.

Modern streamers are equipped with birds, compasses and GPS receiver buoys. Birds are devices equipped with fins, spaced at given intervals, and are in communication with the vessel to control streamer depth and transverse spatial position. Alternatively, the receivers can be stationary and positioned on the ocean floor as autonomous nodes or in an ocean bottom cable.

Depending upon the sensor type, the returning energy is recorded as a pressure, velocity or acceleration variation as a function of time at each receiver position. Combining recordings made at multiple source and receiver locations can be used to form an image of the subterranean features of the earth. Images formed from reflection seismology are useful for locating structures that are indicative of oil and/or gas reservoirs.

Narrow azimuth towed streamer 3D acquisition (see Figure 2) usually consists of a single vessel 101 equipped with one or more sources 104 and towing one or more streamers 105. The vessel is sailed over the survey area until the survey is complete and then, the vessel may further perform infill and/or reshoot for areas in which the detection was poor or affected by various reasons. Thus, for a vessel with a given number of streamers and sources, the acquisition time largely depends on the survey area's size.

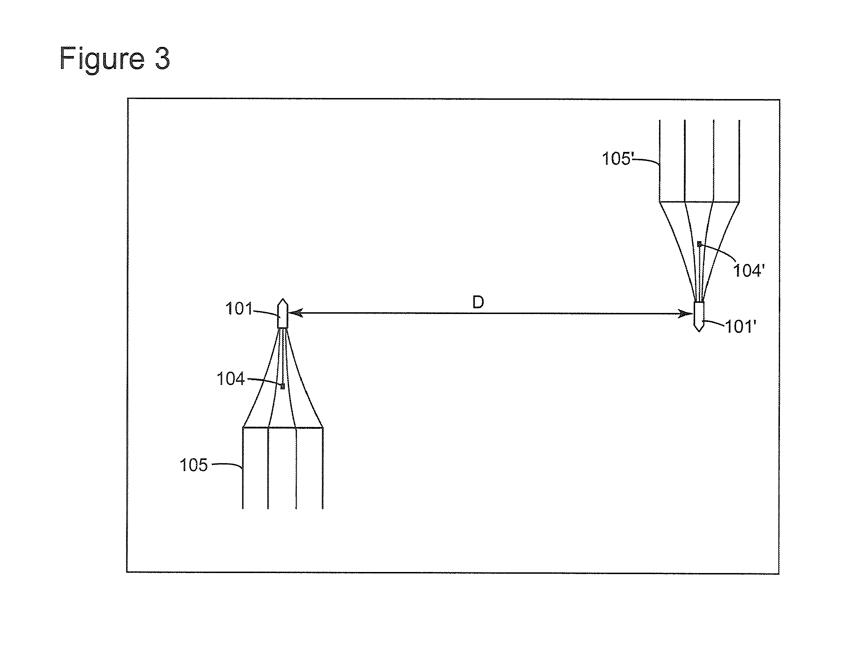

However, in some geographical locations there are seasonal limitations for how long vessels can operate safely and efficiently, e.g., the Arctic region. In such areas, depending on the size of the survey being acquired, there may not be sufficient time to acquire the survey with a single vessel, and the seismic vessel may need to return the following year to complete the dataset. In such scenarios, it can be advantageous to operate two vessels 101 and 101' at the same time to reduce acquisition time, as illustrated in Figure 3. Such a scheme has drawbacks as seismic interference noise will contaminate the records, e.g., energy from the source 104 on vessel 101 is being recorded on the streamers 105' on vessel 101' and vice versa. To minimize this effect, vessels 101 and 101' are normally operated as far apart as possible (i.e., a distance D between them is calculated to be maximum for a survey area 100 having a given size and shape) so as to reduce the amplitude of the interference noise as much as possible.

In addition, the timing of the sources on both vessels may be desynchronized to make sure the cross-talk noise appears at varying times on the records so as not to constructively interfere. Nevertheless, this interference noise may still has high amplitude and arrive at travel times coinciding with weak reflection energy, which is undesirable.

Thus, there is a need to provide a method for reducing an acquisition time of a seismic survey performed in survey areas that have seasonal or other time limitations and also to reduce an interference noise when two or more source vessels are used.

### SUMMARY

According to one exemplary embodiment, there is a method for acquiring seismic data in a region with time restrictions. The method includes deploying first and second seismic vessels having first and second seismic sources, respectively; separating the first and second seismic sources from each other by a predetermined distance *d*; towing the first and second seismic sources across the region while maintaining the predetermined distance *d*; shooting the first and second seismic sources; and recording seismic signals corresponding to the first and second seismic sources. The predetermined distance *d* is calculated so that first seismic signals corresponding to the first source are recorded during an actual recording portion of a seismic record while second seismic signals corresponding to the second source are recorded during a recording lag portion of the seismic record, which is later in time than the actual recording portion.

According to another embodiment, there is a system for acquiring seismic data in a region with time restrictions. The system includes a first seismic vessel towing a first seismic source and a first streamer; a second seismic vessel towing a second seismic source and a second streamer; and a controller. The controller is configured to maintain the first and second seismic sources separated from each other by a predetermined distance *d* while towing them across the region, shoot the first and second seismic sources, and receive recorded seismic signals corresponding to the first and second seismic sources. The predetermined distance *d* is calculated so that first seismic signals corresponding to the first source are recorded during an actual recording portion of a seismic recording while second seismic signals corresponding to the second source are recorded during a recording lag portion of the seismic recording, which is later in time than the actual recording portion. The seismic recording includes traces recorded by plural first receivers towed by the first vessel.

According to still another exemplary embodiment, there is a non-transitory computer readable medium storing computer executable instructions, wherein the instructions, when executed by a computer, implement the method noted above.

### BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 illustrates a traditional marine seismic survey system;

Figure 2 illustrates a marine seismic survey system that uses deflectors for maintaining given distances between the streamers;

Figure 3 illustrates two seismic vessels that tow seismic sources separated by a maximum distance for minimizing interference between the sources;

Figure 4 illustrates two seismic vessels that tow seismic sources separated by a reduced distance for minimizing interference between the sources according to an embodiment;

Figures 5A-B illustrate recordings generated by seismic receivers according to an embodiment;

Figure 6 illustrate how a distance between the seismic sources is calculated according to an embodiment;

Figures 7A-C illustrate how two vessel survey a given region based on a calculated distance d that reduces a seismic survey time while also reduces an interference of signals recorded by the seismic receives according to an embodiment;

Figure 8 is a flowchart of an acquisition method that uses the distance d according to an embodiment;

Figure 9 is a schematic diagram of a computing device that implements one or more of the above noted methods; and

Figure 10 illustrates a curved profile streamer.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to a marine seismic system having two vessels for generating and recording seismic waves. However, the embodiments to be discussed next are not limited to a marine seismic system having two vessels, but may be applied to other systems having more than two vessels.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures, or characteristics may be combined in any suitable manner in one or more embodiments.

According to an exemplary embodiment, there is an acquisition method that synchronizes the firing times of the sources on different vessels and calculates a cross-line separation of the vessels in such a way that the main interference noise is largely received in the recording lag and such, any interference noise that is recorded is easy to be removed.

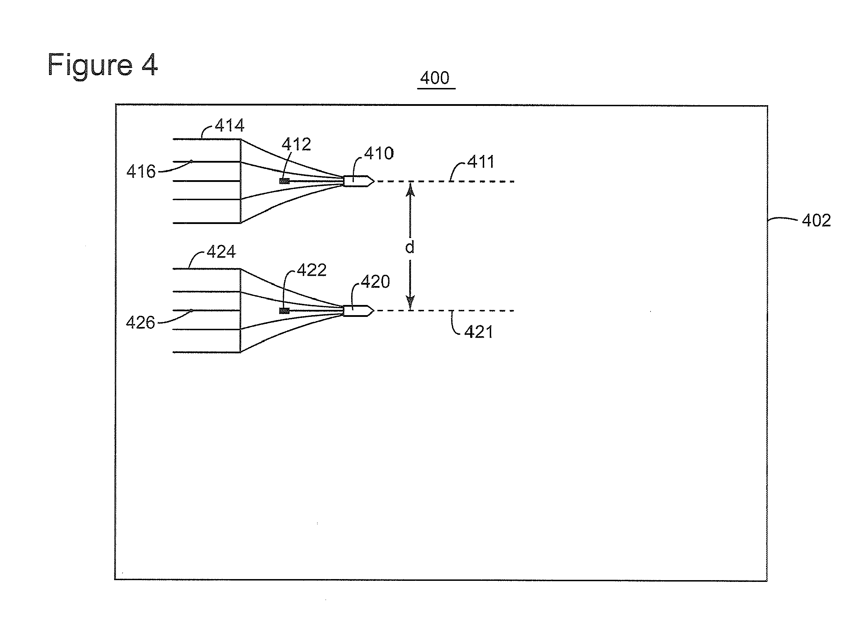

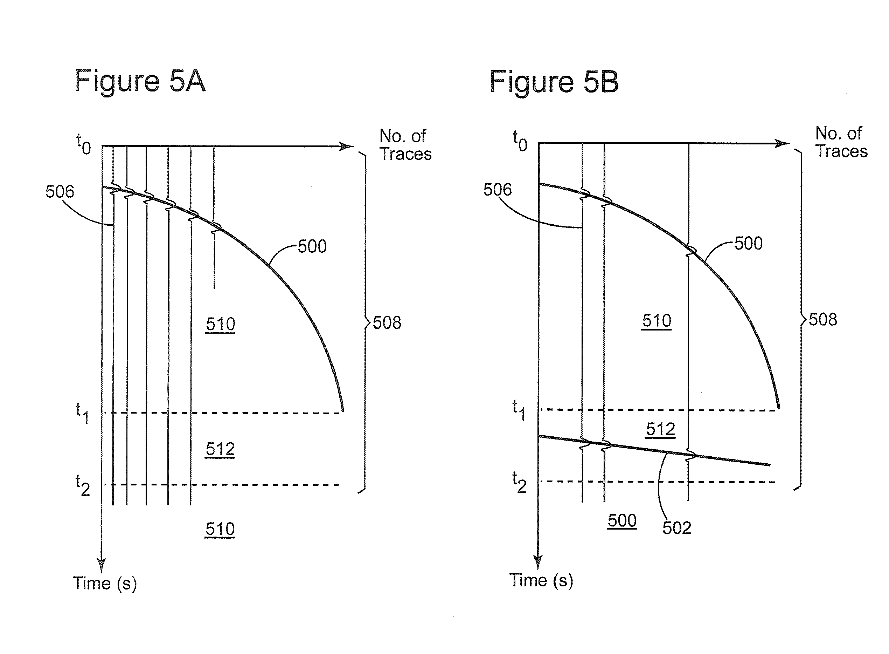

For exemplifying the method, consider a seismic survey system 400, illustrated in Figure 4, that performs a seismic survey on a given survey area 402. System 400 includes first vessel 410 and second vessel 420, each towing a corresponding source 412, 422 and one or more streamers 414, 424. Note that both vessels may simultaneously generate seismic signals (i.e., simultaneously shot sources 412 and 422) and record their reflections and/or refractions from subsurface events. Thus, for given receivers (e.g., hydrophone, accelerometer, three component accelerometer, or combination of them) 416 towed by the first vessel 410, the traces (e.g., pressure amplitude) 506 recorded versus time characterize an event 500 which is represented in Figure 5A. Note that plural traces 506 are recorded by plural receivers towed by one of the vessels.

The seismic recording 508 illustrated in Figure 5A may include two portions, an actual recoding portion 510 that extends from time t0 to t1 and a recording lag portion 512 that extends from t1 to t2. The actual recording portion 510 is where the reflections and/or refractions from the generated seismic waves are recorded. The size (i.e., t1 - t0) of the actual recording portion depends on various factors, e.g., depth of the ocean bottom, depth of the subsurface of interest, vessel speed, volume and depth of the seismic source (because the air gun compressors take time to charge), etc. For these reasons, the recording lag portion 512, which extends between two consecutive actual recording portions 510, is considered to not include signals of interest (when a single vessel is used) and it is defined by time interval t1-t2. This time interval accounts for the limitations on how frequently the seismic source can be fired. For example, suppose that the seismic source is fired at time t0 and it needs a time t2-t0 to be recharged to be ready to fire again. Also suppose that the depth of the exploration target is such that a time interval t1-t0 is enough for receiving and recording all the seismic waves of interest. This means that from a recording point of view a new shot of the seismic shot may be started at t1, but this is not possible because of practical considerations associated with the seismic source. Thus, the source is shot at t2. The time interval t2 - t1 represents the recording lag time between recordings, a time interval during which no seismic waves are recorded (assuming a single vessel survey).

In some cases, it is beneficial to use continuous recording where strictly speaking there is no recording lag. Nevertheless, for processing purposes, the data will be separated into individual traces, and at later recording times the weak reflected energy below the target is of no interest and can be considered as a recording lag.

However, when two or more source vessels are used, the recording lag portion 510 may be used to record the seismic waves coming from another vessel, as illustrated in Figure 5B. In other words, if vessel 410 shots source 412, the signals reflected from this source are recorded as traces 506, which characterizes an event 500 illustrated in Figure 5B. However, the same receivers also record an event 502 that corresponds to reflections from source 424 of second vessel 420. If a distance "d" between traveling paths 411 and 421 of vessels 410 and 420, respectively, is adjusted as discussed next according to a novel embodiment, interference noise 502 (for the receiver 416 of the first vessel 410) from second source 422 is recorded mainly inside recording lag portion 512 as illustrated in Figure 5B.

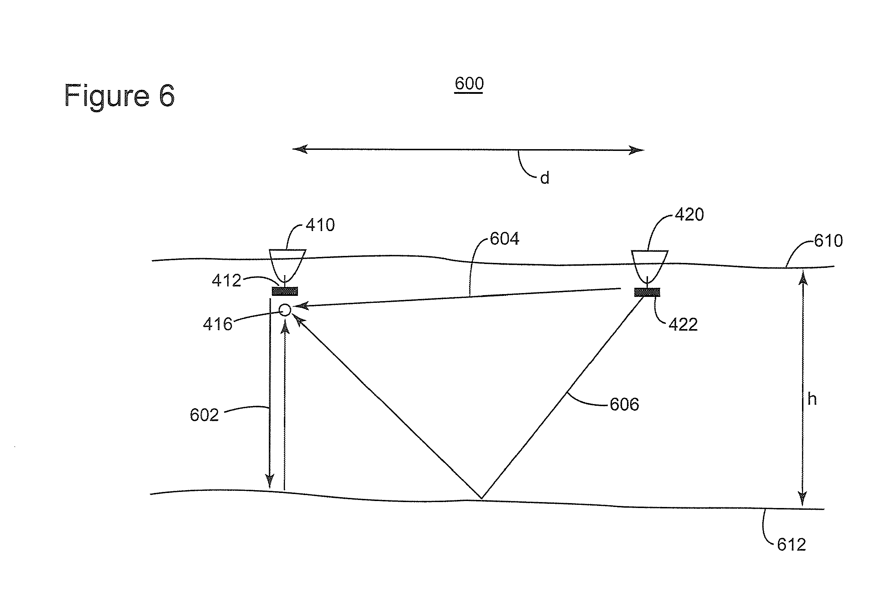

Figure 6 explains why interference noise 502 generated by second source 422 is recorded, later in time, at receiver 416, then signal 500 generated by source 412. Figure 6 illustrates a system 600 having first and second vessels 410 and 420 sailing along lines entering into the page. A seismic wave 602 generated by source 412 is recorded at receiver 416 and seismic waves 604 and 606 generated by source 422 are also recorded by receiver 416. However, if a distance h between water surface 610 and ocean bottom (or structure of interest in the subsurface) 612 is smaller than half of cross-line offset d between the vessels, then seismic wave 602 is recorded first by receiver 416, followed by seismic wave 604 and seismic wave 606. Seismic wave 604 is called a direct arrival because it propagates directly from source 422 to receiver 416 without reflecting at the ocean bottom.

Thus, depending on the desired record length, the cross-line offset d between vessels 410 and 420 may be defined such that main interference noise 502 from the other vessel 420 largely arrives in recording lag time 512 between records 510. The main interference noise may include the direct arrival (604) and the water bottom reflection (606). In other words, a time length of the actual recording portion may be selected prior to deploying the first and second seismic sources. Then, distance *d* is calculated based the selected time length of the actual recording portion, a speed of sound in water, and a depth of the ocean bottom at the region.

In one embodiment, because main interference noise 502 comes from the direct arrival 604, the vessel cross-line separation d can be the record length (t1-t0) multiplied by the speed of sound in water (e.g., 1450 m/s but other values may also be used). Thus, if two vessels 410 and 420 operate in the same area, along parallel paths in a water depth of 400 m and have identical timing for shooting the sources, a direct arrival 604 from vessel 420 to detector 416 towed by vessel 410 will need a lag time t1 = distance (d) / sound velocity in water. For example, for a lag time of 6000 ms, the cross-line separation between the vessels is around 8.7 km. For this separation, the reflection signal 606 will arrive after 6020 ms, the first multiple will arrive after 6100 ms, the second multiple will arrive after 6224 ms, and so on.

With a streamer spread of 1 km, i.e., a distance p between the first streamer and the last streamer, the arrival time of the interference time would be increased by 1000m / water velocity = 700 ms. Thus, with careful timing it is possible to ensure the majority of this noise arrives in the recording lag, i.e., before end of time t2.

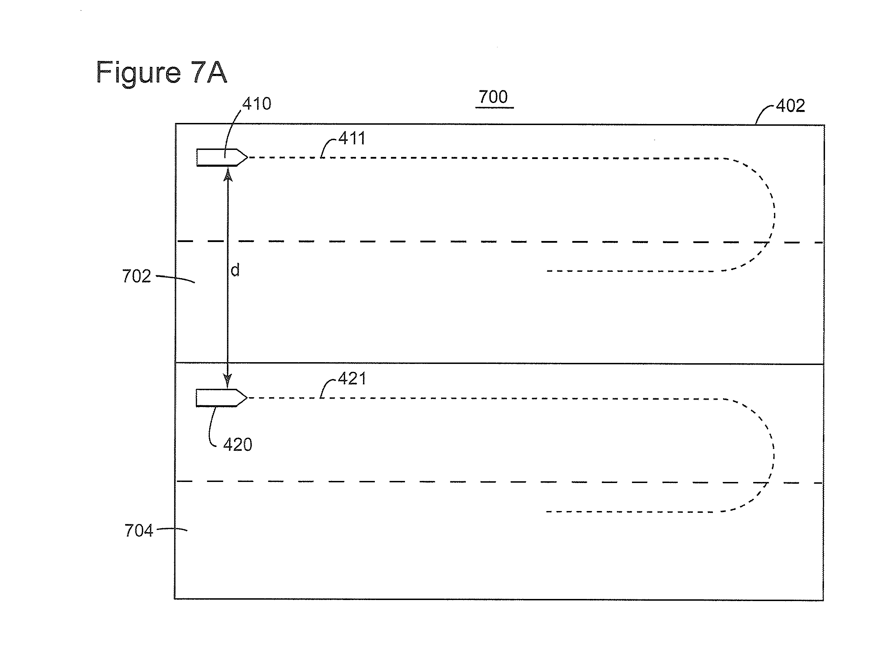

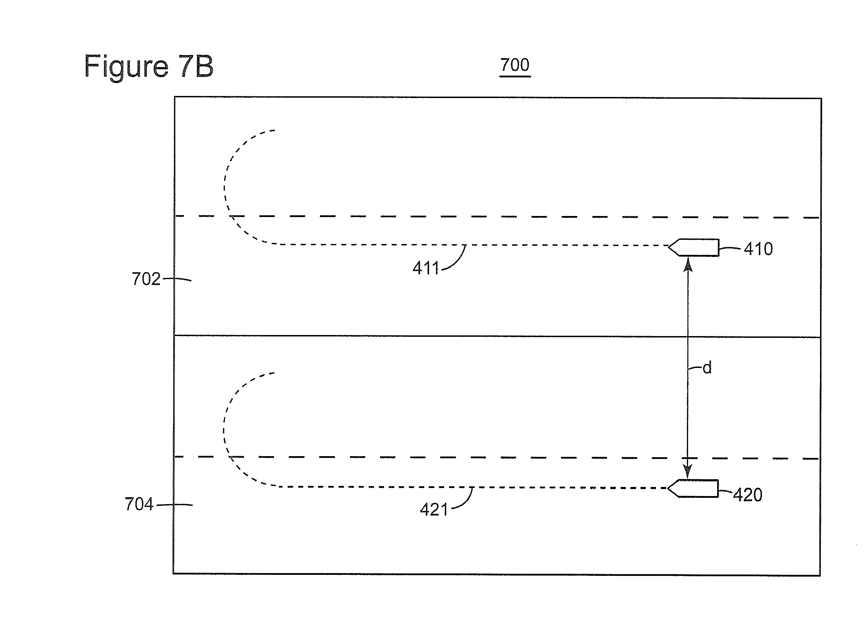

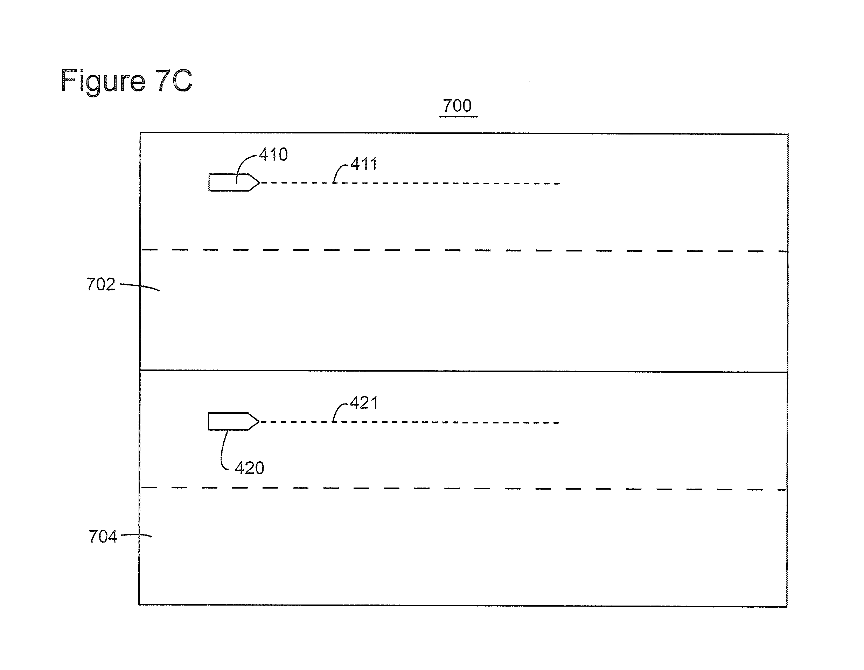

In other words, Figures 7A-C illustrate the distances and paths to be followed by the two vessels 410 and 420 and their shooting pattern when the cross-line separation d is calculated so that the signals from one vessel arrive in the recording lag for the receivers of the other vessel. Figure 7A shows a system 700 including vessels 410 and 420. For simplicity, their sources, streamers and receivers are not illustrated. The two vessels 410 and 420 advance simultaneously along parallel paths 411 and 421, respectively, to cover survey area 402. Survey area 402 may be split into first area 702 and second area 704, with each vessel aiming to cover one of these two areas. Vessels 410 and 420 maintain the cross-line separation d during the seismic survey and the sources are configured to be simultaneously shot. When arriving at the end of the survey areas 702 and 704, vessels 410 and 420 change their directions as illustrated in Figure 7B, but continue to maintain the cross-line separation d and to shot the sources simultaneously. Their advance along the shooting paths 411 and 421 is also illustrated in Figure 7C. In this way, the given survey area 402 can be covered in half the time necessary when using a single vessel and without the drawback of the exiting surveys of blending the recorded seismic waves from the two vessels.

The proposed technique can be extended to more than two vessels so long as they are all separated by a calculated distance (predetermined distance) similar to the one discussed above. According to another embodiment, small randomization of the shooting time may be introduced to minimize alignment of the remaining cross-talk noise in various gathers. The randomization may be of maximum 500 ms. It can be advantages to remove the cross-talk noise using impulsive denoise algorithms, some of which may behave better with particular time shifts. Hence, rather than using time shifts which are strictly random, time shifts may be designed so the cross-talk elimination algorithms work optimally. The cross-line separation d may need to be adjusted with the depth of the seabed, from survey to survey. Also, it may need to be adjusted based on the sound velocity in water. The proposed technique can allow faster acquisition of datasets with no or minimal deterioration in data quality while conventional methods require noise attenuation techniques to handle strong interference noise.

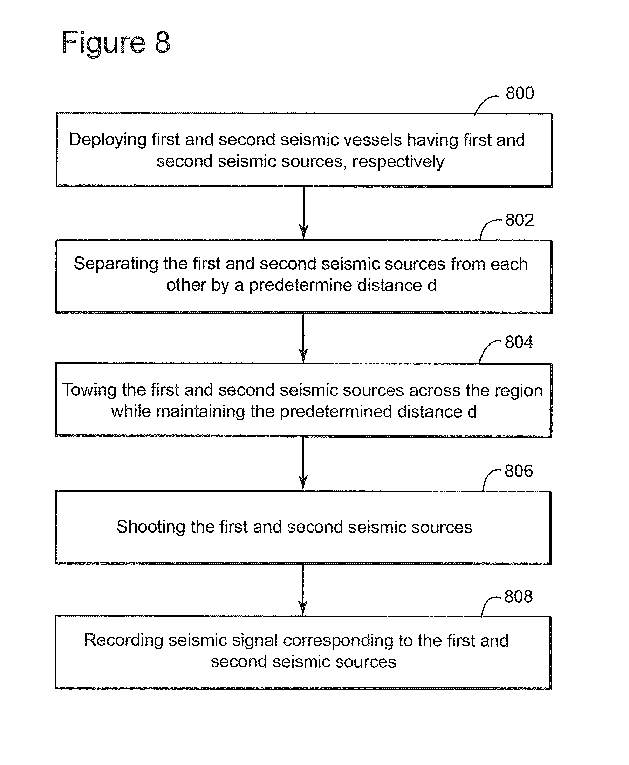

A method for calculating the cross-line separation d between two vessels is now discussed with regard to Figure 8. The method for acquiring seismic data in a region with time restrictions has a step 800 of deploying first and second seismic vessels having first and second seismic sources, respectively; a step 802 of separating the first and second seismic sources from each other by a predetermined distance *d*; a step 804 of towing the first and second seismic sources across the region while maintaining the predetermined distance *d*; a step 806 of shooting the first and second seismic sources; and a step 808 of recording seismic signals corresponding to the first and second seismic sources. The predetermined distance *d* is calculated so that first seismic signals corresponding to the first source are recorded during an actual recording portion while second seismic signals corresponding to the second source are recorded during a recording lag portion, which is later in time than the actual recording portion. Regarding step 806, note that the two sources may be shoot at the same time. However, when an additional random shift is used (for example to ensure that the cross-energy does not arrive consistently with the same delay, the sources are not shoot exactly at the same time.

As also will be appreciated by one skilled in the art, the exemplary embodiments may be embodied in a computing device (e.g., a controller located on one or both vessels), as a method or in a computer program product. Accordingly, the exemplary embodiments may take the form of an entirely hardware embodiment or an embodiment combining hardware and software aspects. Further, the exemplary embodiments may take the form of a computer program product stored on a computer-readable storage medium having computer-readable instructions embodied in the medium. Any suitable computer-readable medium may be utilized, including hard disks, CD-ROMs, digital versatile discs (DVDs), optical storage devices, or magnetic storage devices such a floppy disk or magnetic tape. Other non-limiting examples of computer-readable media include flash-type memories or other known types of memories.

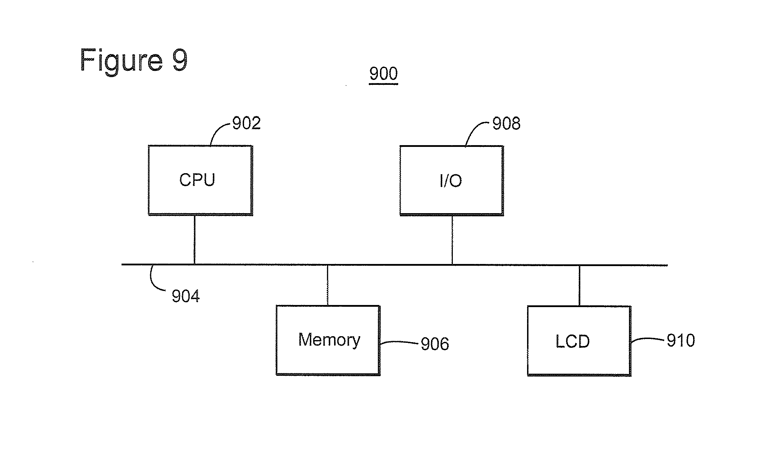

An exemplary computing device is illustrated in Figure 9. The computing device 900 includes a processor 902 that is connected through a bus 904 to a storage device 906. Processor 902 may be configured to determine predetermined distance d, maintain the first and second seismic sources (412, 422) separated from each other by the predetermined distance *d* while towing them across the region, shoot the first and second seismic sources (412, 422), and receive recorded seismic signals corresponding to the first and second seismic sources (412, 422). The predetermined distance *d* may be calculated by processor 902 so that first seismic signals corresponding to the first source (412) are recorded during an actual recording portion (510) of a seismic recording (508) while second seismic signals corresponding to the second source (422) are recorded during a recording lag portion (512) of the seismic recording (508), which is later in time than the actual recording portion (510).

Computing device 900 may also include an input/output interface 908 through which data can be exchanged with the processor and/or storage device. For example, a keyboard, mouse or other device may be connected to the input/output interface 908 to send commands to the processor and/or to collect data stored in storage device or to provide data necessary to the processor. In one application, the processor calculates the distance d based on the time length of the actual record and the speed of light, which information may be provided through the input/output interface. Also, the processor may be used to process, for example, seismic data collected during the seismic survey. Results of this or another algorithm may be visualized on a screen 910.

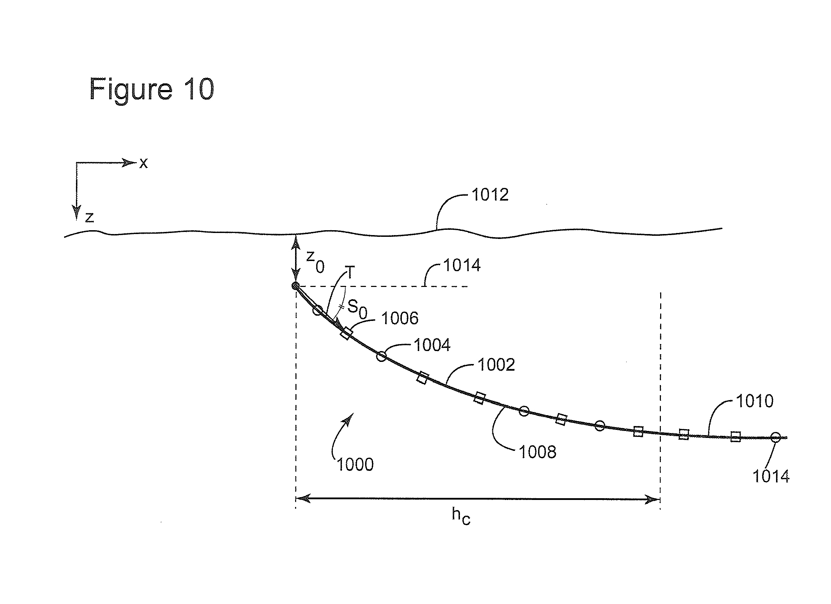

The above embodiments were discussed without specifying what types of seismic receivers are used to record the seismic data. In this sense, it is known in the art to use, for a marine seismic survey, streamers that are towed one or more vessels and the streamers include the seismic receivers. The streamers may be horizontal or slanted or having a curved profile as illustrated in Figure 10.

The curved streamer 1000 of Figure 10 includes a body 1002 having a predetermined length; plural detectors 1004 provided along the body; and plural birds 1006 provided along the body for maintaining the selected curved profile. The streamer is configured to flow underwater when towed such that the plural detectors are distributed along the curved profile. The curved profile may be described by a parameterized curve, e.g., a curve described by (i) a depth z₀ of a first detector (measured from the water surface 1012), (ii) a slope s₀ of a first portion T of the body with an axis 1014 parallel with the water surface 1012, and (iii) a predetermined horizontal distance h_{c} between the first detector and an end of the curved profile. It is noted that not the entire streamer has to have the curved profile. In other words, the curved profile should not be construed to always apply to the entire length of the streamer. While this situation is possible, the curved profile may be applied only to a portion 1008 of the streamer. In other words, the streamer may have (i) only a portion 1008 having the curved profile or (ii) a portion 1008 having the curved profile and a portion 1010 having a flat profile, the two portions being attached to each other. Regarding the source, it may be a source array that includes plural individual source elements. An individual source element may be an air gun, a vibrator, etc. The individual source elements may be distributed along a horizontal line, slanted line, curved line, parameterized line, etc. to form a broadband source.

The disclosed exemplary embodiments provide computer software, a processing device and a method for calculating a distance "d" between seismic sources that are towed for surveying a given area that has temporal constraints. It should be understood that this description is not intended to limit the invention. On the contrary, the exemplary embodiments are intended to cover alternatives, modifications, and equivalents, which are included in the spirit and scope of the invention as defined by the appended claims. Further, in the detailed description of the exemplary embodiments, numerous specific details are set forth to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone, without the other features and elements of the embodiments, or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A method for acquiring seismic data in a region with time restrictions, the method comprising:
deploying first and second seismic vessels (410, 420) having first and second seismic sources (412, 422), respectively;
separating the first and second seismic sources (412, 422) from each other by a predetermined distance *d*;
towing the first and second seismic sources (412, 422) across the region while maintaining the predetermined distance *d*;
shooting the first and second seismic sources (412, 422); and
recording seismic signals corresponding to the first and second seismic sources (412, 422),
wherein the predetermined distance *d* is calculated so that first seismic signals corresponding to the first source (412) are recorded during an actual recording portion (510) of a seismic record (508) while second seismic signals corresponding to the second source (422) are recorded during a recording lag portion (512) of the seismic record (508), which is later in time than the actual recording portion (510).

2. The method of Claim 1, wherein another actual recording portion follows, in time, the recording lag portion.

3. The method of Claim 1, wherein the seismic recording (508) includes traces recorded by plural first receivers (416) towed by the first vessel and the first and second seismic sources are simultaneously shot.

4. The method of Claim 3, wherein a random time shift is used to ensure that cross-talk energy arrives with changing delay.

5. The method of Claim 3, wherein a first part of the traces that lie in the actual recording portion correspond to the first seismic source and a second part of the traces that lie in the recording lag portion correspond to the second seismic source.

6. The method of Claim 5, wherein a direct arrival wave from the second seismic source and a water bottom reflection wave corresponding to the second seismic source are recorded only in the recording lag portion.

7. The method of Claim 1, further comprising:
selecting a time length of the actual recording portion prior to deploying the first and second seismic sources.

8. The method of Claim 7, further comprising:
calculating the predetermined distance *d* based the selected time length of the actual recording portion, a speed of sound in water, and a depth of the ocean bottom at the region.

9. The method of Claim 7, further comprising:
calculating the predetermined distance *d* as a product of the selected time length for the actual recording portion and a speed of sound in water.

10. A system for acquiring seismic data in a region with time restrictions, the system comprising:
a first seismic vessel (410) towing a first seismic source (412) and a first streamer (414);
a second seismic vessel (420) towing a second seismic source (422) and a second streamer (424); and
a controller (900) configured to,
maintain the first and second seismic sources (412, 422) separated from each other by a predetermined distance *d* while towing them across the region,
shoot the first and second seismic sources (412, 422), and
receive recorded seismic signals corresponding to the first and second seismic sources (412, 422),
wherein the predetermined distance *d* is calculated so that first seismic signals corresponding to the first source (412) are recorded during an actual recording portion (510) of a seismic recording (508) while second seismic signals corresponding to the second source (422) are recorded during a recording lag portion (512) of the seismic recording (508), which is later in time than the actual recording portion (510), and
wherein the seismic recording (508) includes traces recorded by plural first receivers (416) towed by the first vessel.

11. The system of Claim 10, wherein another actual recording portion follows, in time, the recording lag portion.

12. The system of Claim 10, wherein the first and second seismic sources are shot simultaneously.

13. The system of Claim 12, wherein a first part of the traces that lie in the actual recording portion correspond to the first seismic source and a second part of the traces that lie in the recording lag portion correspond to the second seismic source.

14. The system of Claim 13, wherein a direct arrival wave from the second seismic source and a water bottom reflection wave corresponding to the second seismic source are recorded only in the recording lag portion.

15. The system of Claim 10, wherein the controller is further configured to:
select a time length of the actual recording portion prior to deploying the first and second seismic sources; and
calculate the predetermined distance *d* based on the selected time length of the actual recording portion, a speed of sound in water, and a depth of the ocean bottom at the region.
